# EUROPÄISCHE PATENTSCHRIFT

(11) **EP 1 376 000 B1**
(45) Veröffentlichungstag und Bekanntmachung des Hinweises auf die Patenterteilung: **23.08.2006**
(21) Anmeldenummer: 03013507.3
(22) Anmeldetag: 13.06.2003
(51) Int. Cl.: F16L 55/105, F16K 3/02

(54) **Trennschieber**
Gate valve
Vanne d'arrêt

(30) Priorität: 17.06.2002 DE 20209420 U
(43) Veröffentlichungstag der Anmeldung: 02.01.2004
(73) Patentinhaber: Erben Kammerer KG, 51469 Bergisch Gladbach (DE)
(72) Erfinder: Kammerer, Bernd, 41424 Bergish Gladbach (DE); Adams, Hans, 51063 Köln (DE)
(74) Vertreter: Selting, Günther

(56) Entgegenhaltungen:
- WO-A-85/04460
- DE-A- 3 545 266
- US-A- 4 489 756
- HORST CZICHOS, HRSG.: "Die Grundlagen der Ingenieurwissenschaften" , SPRINGER VERLAG , BERLIN, HEIDELBERG, NEW YORK; XP002251372 * Seite L32, linke Spalte, Absatz 5 *

## Beschreibung

Die Erfindung betrifft einen Trennschieber zum Absperren von Rohrleitungen, mit einem einen Durchlass enthaltenden Schiebergehäuse und einem darin bewegbaren Schieber.

Trennschieber dienen zum Absperren von Rohrleitungen, welche Fluide führen. Bei den Fluiden kann es sich um Gase, Flüssigkeiten, Feststoffe und insbesondere um Mehrphasensysteme handeln, bei denen beispielsweise Feststoffe zusammen mit einem gasförmigen oder flüssigen Trägermedium transportiert werden. Alle diese Materialien haben ein breites Spektrum. So können Feststoffe in Form von körnigem und abrasivem Gut bis hin zu Baumstämmen oder Steinen durch die Rohrleitung bewegt werden. Bei den Flüssigkeiten und Gasen kann es sich um aggressive Substanzen handeln, beispielsweise Säure oder jegliche Art von Abwasser. Ferner können die Größen von Trennschiebern in einem großen Bereich variieren. Ein charakteristisches Maß ist der Durchmesser des Durchlasses bzw. der angrenzenden Rohre. Häufig liegt hier dieser Durchmesser in der Größenordnung von 40 cm.

In dem Schiebergehäuse eines Trennschiebers ist der Schieber innerhalb einer Führungsbahn linear beweglich, um von der Öffnungsposition in die Schließposition gebracht zu werden. Diese Verstellung geschieht in der Regel pneumatisch oder hydraulisch oder auch motorisch. In jeder dieser beiden Positionen muss der Schieber in bezug auf den Durchlass abgedichtet sein, um zu verhindern, dass das Medium am Trennschieber unkontrolliert austritt. Üblicherweise werden für die Abdichtung des Schiebers ringförmige Weichdichtungen benutzt. Diese bestehen aus Graphit, PTFE, gefüllt mit Graphit (Manoy), oder aus Elektrokohle. Derartige Dichtungen werden im Falle von schwierigen Medien schnell zerstört, und zwar durch mechanische Einwirkung, wie Abrasion oder durch chemische oder thermische Einwirkungen. Zwar sind die Dichtungen mit einem gewissen Abstand von dem Umfang des Durchlasses angeordnet, jedoch werden sie von dem Medium erreicht.

Zur Verbesserung der Abdichtung wurden Trennschieber entwickelt, die im Schiebergehäuse Fluidzylinder aufweisen, in welchen ringförmige Dichtkörper enthalten sind. Jeder Dichtkörper ist an der dem Schieber zugewandten Fläche mit einer Weichdichtung versehen, mit der er gegen den Schieber drückt. Dadurch sollen etwaige Abnutzungen der Weichdichtungen kompensiert werden, und es wird sichergestellt, dass die Ringkolben stets mit der erforderlichen Anpresskraft gegen den Schieber gedrückt werden.

Ein Trennschieber, von dem der Oberbegriff des Patentanspruchs 1 ausgeht, ist beschrieben in DE 35 45 266 A1. Bei diesem Trennschieber sind die Schieberplatte und die Dichtkörper als einteilige sinterkeramische Presskörper ausgebildet, die eine Rauhtiefe von weniger als 0,4 µm haben. Derartige einteilige sinterkeramische Presskörper müssen mit hoher Genauigkeit gefertigt werden, weil sie starr sind und keine Deformierungen zulassen. Um die erforderliche Festigkeit zu erhalten, muss die Schieberplatte eine relativ große Dicke haben. Dadurch werden wiederum die Abmessungen der gesamten Trennschieberstruktur vergrößert und das Gewicht wird erhöht.

Der Erfindung liegt die Aufgabe zugrunde, einen Trennschieber zu schaffen, der ohne wesentliche Abnutzung auch bei schwierigen Fluiden in seiner Dichtigkeit nicht nachläset. Mit anderen Worten soll die Lebensdauer der Dichtung verlängert werden.

Die Lösung dieser Aufgabe erfolgt erfindungsgemäß mit den im Anspruch 1 angegebenen Merkmalen. Hiernac erfolgt die Abdichtung zwischen starren Dichtkörpern, die in Fluidzylindern geführt und von Fluid abgestützt sind, und dem Schieber, wobei die miteinander zusammenwirkenden Kontaktflächen mit einer Hartstoffschicht versehen sind, die härter ist als das Material des Schiebers und deren Oberfläche eine Rauhigkeit von weniger als 10 *µ*m hat. Dies bedeutet, dass die abdichtend gegeneinander stoßenden Oberflächen eine große Härte und eine große Ebenheit haben, so dass sie sich satt und ohne Einschlüsse gegeneinander legen. Diese Hartstoffdichtung wird benutzt in Kombination mit einer nachgiebigen Andrückung der Dichtkörper gegen den Schieber. Dies bedeutet, dass der Schieber die Möglichkeit hat, sich quer zu der Schieberebene zu bewegen oder zu verformen, ohne dass die Dichtwirkung beeinträchtigt wird. Diese Bewegungsmöglichkeit entsteht dadurch, dass die ringförmigen Dichtkörper Kolben darstellen, die entweder mit einem Gas (Druckluft) beaufschlagt werden oder mit einer Flüssigkeit. Im Falle einer Flüssigkeitsbeaufschlagung ist wegen der Inkompressibilität der Flüssigkeit ein Gasdruckspeicher vorzusehen, um die erforderliche Nachgiebigkeit der Andrückkraft zu erreichen.

Die Hartstoffschicht besteht vorzugsweise aus einem Karbid oder Oxid in keramischer oder metallischer Bindung. Solche Hartstoffbeschichtungen sind bekannt und brauchen daher hier nicht im einzelnen erläutert zu werden. Beispielsweise eignet sich Siliziumkarbid oder Siliziumdioxid.

Die Oberflächenrauhigkeit der Hartstoffschichten ist vorzugsweise geringer als 2 µm und insbesondere geringer als 0,4 µm. Die geringe Oberflächenrauhigkeit wird nach dem Aufbringen der Hartstoffschicht durch Feinstbearbeitung erreicht, insbesondere durch Honen bzw. durch Läppen, bei dem eine paarweise Feinstbearbeitung erfolgt, bei der die zu bearbeitenden Flächen gegenseitig aufeinander gerieben werden, so dass eine exakt vollflächige gegenseitige Anpassung erfolgt, wobei jedoch nur diese beiden individuellen Flächen mit der erforderlichen Dichtwirkung zusammenpassen.

Gemäß einer bevorzugten Ausgestaltung der Erfindung ist vorgesehen, dass die Kontaktfläche des Schiebers in Bewegungsrichtung des Schiebers eine Breite hat, die kleiner ist als diejenige des Dichtkörpers, wobei der übrige Bereich der dem Schieber zugewandten Fläche zurückliegend angeordnet ist. Auf diese Weise wird erreicht, dass die abdichtend gegeneinander liegenden Flächen nur so breit wie nötig sind und sich nicht über die volle Breite der Wand des ringförmigen Dichtkörpers erstrecken. Ferner wird erreicht, dass Fremdmaterie aus dem Bereich der Dichtflächen herausgedrückt wird.

Im folgenden wird unter Bezugnahme auf die Zeichnungen ein Ausführungsbeispiel der Erfindung näher erläutert:

Es zeigen:
- Fig. 1: einen Querschnitt durch den Trennschieber,
- Fig. 2: eine Ansicht des Trennschiebers aus Richtung des Pfeiles II von Fig. 1,
- Fig. 3: eine vergrößerte Darstellung der Einzelheit III aus Fig. 1,
- Fig. 4: eine vergrößerte Darstellung der Einzelheit IV aus Fig. 3 und
- Fig. 5: eine Frontansicht des Schiebers.

Der dargestellte Trennschieber weist ein Gehäuse 10 auf, das aus zwei Gehäusehälften 10a, 10b besteht, welche axial gegeneinander gesetzt und miteinander verschraubt sind. Die Gehäusehälften haben miteinander fluchtende Bohrungen, die einen Durchlass 11 bilden. An den Enden der Gehäusehälften befindet sich jeweils ein Flansch 12 zum Anflanschen einer Rohrleitung. Zwischen den Gehäusehälften ist ein länglicher Hohlraum gebildet, in dem ein plattenförmiger Schieber 13, der eine Öffnung 14 von etwa der selben Größe wie der Durchlass 11 aufweist, quer zur Achsrichtung des Gehäuses verschiebbar ist. Das Gehäuse 10 weist der Ebene des Schiebers 13 zwei nach entgegengesetzten Seiten abstehende Aufnahmeräume 15,16 auf, von denen jeweils einer eine Hälfte des Schiebers 13 aufnehmen kann, während sich die andere Hälfte in dem Gehäuse 10 befindet. An dem äußeren Ende des Aufnahmeraums 16 ist über Stangen 17 ein Pneumatikzylinder 18 befestigt, der einen Kolben 19 enthält. Der Pneumatikzylinder wird durch ein Ventil 20, das an eine (nicht dargestellte) Druckluftquelle angeschlossen ist, gesteuert. Mit dem Kolben 19 ist eine Kolbenstange 21 verbunden, welche in das Ende des Aufnahmeraumes 16 hineinragt und an ihrem anderen Ende mit dem Schieber 13 verbunden ist. Der Durchgang der Kolbenstange 21 durch die Endwand 22 des Aufnahmeraums 16 ist mit einer Stopfbuchsendichtung 23 abgedichtet.

Bei dem vorliegenden Ausführungsbeispiel haben die Aufnahmeräume 15,16 Abschirmwände 24, um Wärmestrahlung von den Wänden des Trennschiebers fernzuhalten.

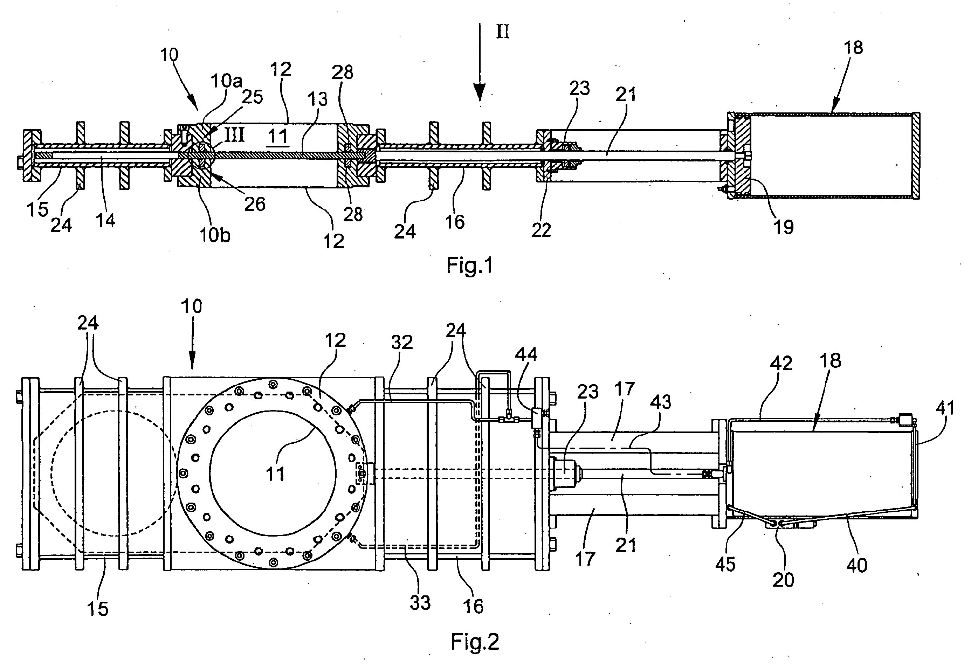

In Figur 1 ist der Schieber 13 in seiner Absperrstellung dargestellt, in welcher sich die Öffnung 14 in dem Aufnahmeraum 15 befindet, während das Gehäuse 10 den geschlossenen Plattenbereich des Schiebers 13 enthält, welcher den Durchlass 11 versperrt. In dieser Schließstellung ist die Kolbenstange 21 aus dem Pneumatikzylinder 18 herausgefahren. Soll der Schieber 13 in die Öffnungsstellung gebracht werden, wird der Kolben 19 im Zylinder 18 zurückgefahren, so dass die Öffnung 14 des Schiebers 13 sich koaxial zu dem Durchlass 11 einstellt.

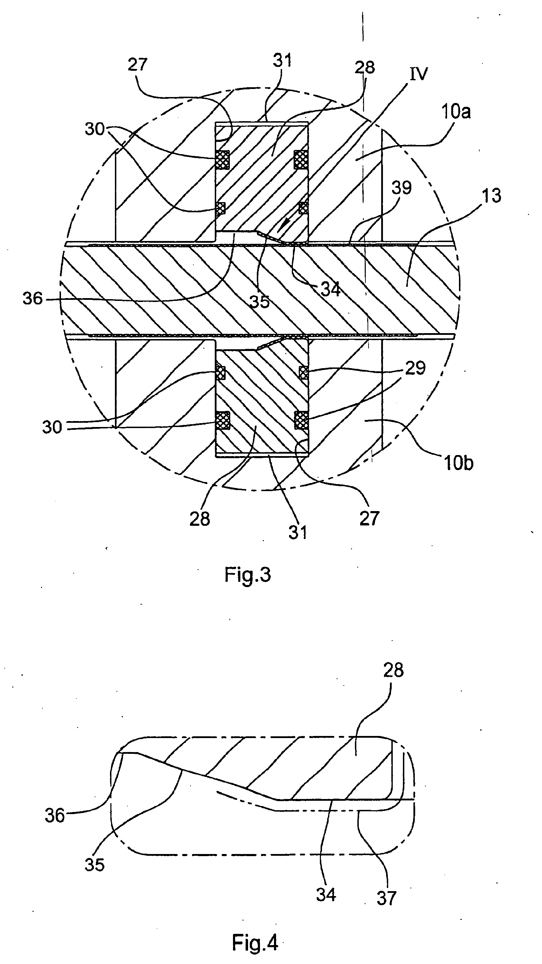

Die Abdichtung des Durchlasses 11 zwischen Gehäuse 10 und Schieber 13 erfolgt durch zwei ringförmige Dichtungen 25,26, von denen jede in einer Gehäusehälfte 10a,10b enthalten ist. Zu diesem Zweck weist jede Gehäusehälfte einen ringförmigen Fluidzylinder 27 auf (Figur 3), der als axiale Nut in die Gehäusehälfte eingearbeitet ist. Jeder Fluidzylinder 27 enthält einen ringförmigen starren Dichtkörper 28, der einen Ringkolben bildet. Die Ringkolben 28 umgeben den Durchlass 11 auf jeder Seite des Schiebers 13. Jeder Dichtkörper 28 enthält an seiner Innenseite zwei Dichtringe 29 und an seiner Außenseite ebenfalls zwei Dichtringe 30 für die Abdichtung gegenüber dem pneumatischen ringförmigen Fluidzylinder 27. In jeden Fluidzylinder 27 führt am äußeren Ende 31 eine Druckleitung 32 bzw. 33 hinein, um den Dichtkörper 28 in Richtung auf den Schieber 13 vorzutreiben.

Jeder Dichtkörper 28 weist an derjenigen Seite, die dem Schieber 13 zugewandt ist, eine Kontaktfläche 34 auf. Diese ist schmaler als die breite des Dichtkörpers, und sie geht über eine Schrägschulter 35 in einen zurückliegenden Bereich 36 über. Die ringscheibenförmige Kontaktfläche 34 befindet sich an dem Dichtkörper 28 an demjenigen Ende, das dem Durchlass 11 benachbart ist, während der Bereich 36 vom Durchlass entfernt ist.

Die Kontaktfläche 34 ist mit einer Hartstoffschicht 37 beschichtet, die sich auch über einen Teil der Schrägschulter 35 erstreckt.

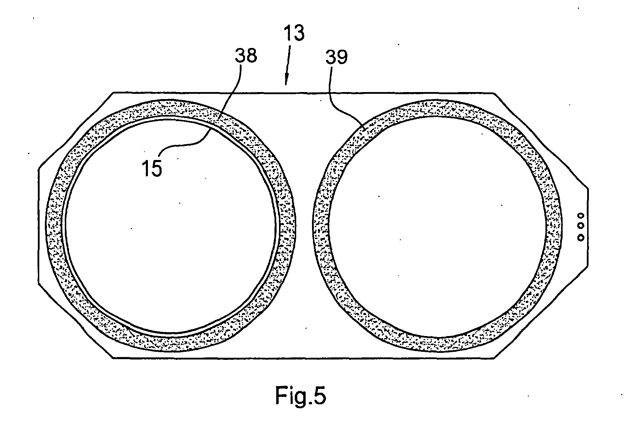

Der Schieber 13 ist auf jeder seiner beiden Seiten ebenfalls mit zwei Hartstoffschichten 38,39 versehen (Figur 5). Diese Hartstoffschichten 38,39 sind ringförmige Scheiben. Die eine Hartstoffschicht 38 ist um die Öffnung 14 des Schiebers 13 herum angeordnet, und die andere Hartstoffschicht 39 ist um die Verschlussfläche des Schiebers angeordnet, die sich in dem Durchlass 11 des Gehäuses befindet, wenn der Schieber in der Schließstellung ist, wie dies in den Figuren 1 und 2 dargestellt ist.

Die Hartstoffschichten 37,38,39 bestehen vorzugsweise aus Keramikmaterial, wie Chromdioxid, oder aus Hartmetall, wie Wolframkarbid. Im Anschluss an ihre Aufbringung sind sie durch Feinstbearbeitung behandelt, und zwar zunächst durch Schleifen und anschließend durch Honen oder Läppen. Die Rauhigkeit beträgt maximal Ra 4,was 4 *µ*m entspricht. Insbesondere liegt sie im Bereich von Ra 0,4, also 0,4 *µ*m, und darunter. Die Breite der Kontaktfläche 34 beträgt weniger als 10 mm und insbesondere etwa 5 mm. Sie sollte nicht größer sein als es für die Dichtwirkung erforderlich ist.

Die Feinstbearbeitung der Oberflächen der Hartstoffschichten erfolgt durch paarweises Läppen, wobei zwei Hartstoffschichten aufeinandergelegt und aneinander gerieben werden. Diese beiden Hartstoffschichten sind diejenigen des Schiebers 13 und des zugehörigen Dichtkörpers. Diejenigen Hartstoffschichten, die später abdichtend gegeneinander liegen sollen, werden durch gegenseitiges Reiben bearbeitet, so dass die Hartstoffschichten paarweise zusammenpassen.

Die Druckbeaufschlagung der Dichtkörper 28 erfolgt von dem Zylinder 18 aus. Von dem Steuerventil 20 führt eine Leitung 40 zu dem rückwärtigen Ende des Zylinders 18. Diese Leitung dient dazu, in dem Zylinder 18 eine auf den Kolben 19 wirkende Kraft zu erzeugen, die den Schieber 13 in die Schließposition treibt. Die Leitung 40 ist über weitere Leitungen 41,42,43 mit einem Verteiler 44 verbunden, an welchen die Leitungen 32 und 33 angeschlossen sind. Bei einer Druckbeaufschlagung des Zylinders 18 wird zunächst der Schieber 13 in die Schließstellung gebracht, und anschließend werden die Dichtkörper 28 von entgegengesetzten Seiten her gegen den Schieber gedrückt. Dieses Andrücken erfolgt nachgiebig. Dies bedeutet, dass die Dichtkörper 28 einer Verformung oder Verschiebung des Schiebers unter Aufrechterhaltung der Dichtwirkung folgen.

Eine weitere Leitung 45, die von dem Ventil 20 aus in das vordere Ende des Zylinders 18 hineinführt, dient dazu, den Kolben 19 in die Rückzugsstellung zu bringen, wodurch der Schieber 13 in den Öffnungszustand bewegt wird.

Der erfindungsgemäße Trennschieber ist für aggressive und abrasive Medien sowie auch für hohe Temperaturen geeignet. Der Rand der Öffnung 14 kann als Klinge ausgebildet sein, so dass etwaige Fremdkörper, die sich in der Öffnungsstellung des Schiebers festsetzen, beim Bewegen des Schiebers zerschnitten werden. Eine solche Klinge braucht nur an der dem Zylinder 18 zugewandten Hälfte der Öffnung 14 des Schiebers ausgebildet zu sein, während die andere Hälfte stumpf sein kann.

## Patentansprüche

1. Trennschieber zum Absperren von Rohrleitungen, mit einem einen Durchlass (11) enthaltenen Schiebergehäuse (10), einem darin bewegbaren Schieber (13), der eine den Durchlass (11) freigebende Öffnung (14) aufweist, und ringförmigen Dichtkörpern (28), die um den Durchlass (11) herum im Schiebergehäuse (10) nachgiebig zu beiden Seiten des Schiebers (13) angeordnet sind, wobei die dem Schieber (13) zugewandten Kontaktflächen (34) der Dichtkörper (28) und die damit abdichtend zusammenwirkenden Kontaktflächen des Schiebers (13) aus Hartstoff bestehen und eine Oberflächenrauhigkeit von weniger als 10 µm haben,
**dadurch gekennzeichnet,**
**dass** die Kontaktflächen (34) Hartstoffschichten (37,38,39) sind, die härter sind als das Material des Schiebers (13), wobei der Schieber (13) imstande ist, sich quer zu der Schieberebene zu verformen.

2. Trennschieber nach Anspruch 1, **dadurch gekennzeichnet, dass** die Hartstoffschicht aus einem Carbid oder Oxid in keramischer oder metallischer Bindung besteht.

3. Trennschieber nach Anspruch 1 oder 2, **dadurch gekennzeichnet, dass** die Hartstoffschichten eine Rauhigkeit von weniger als 4 µm haben.

4. Trennschieber nach einem der Ansprüche 1 - 3, **dadurch gekennzeichnet, dass** die miteinander zusammenwirkenden Hartstoffschichten (37,38,39) von Schieber (13) und Dichtkörper (28) paarweise bearbeitet sind.

5. Trennschieber nach einem der Ansprüche 1 - 4, **dadurch gekennzeichnet, dass** die Kontaktfläche (34) des Dichtkörpers (26) sich nur über einen Teil der Breite des Dichtkörpers erstreckt, wobei der übrige Bereich (36) der dem Schieber (13) zugewandten Fläche zurückliegend angeordnet ist.

6. Trennschieber nach einem der Ansprüche 1 - 5, **dadurch gekennzeichnet, dass** die Fluidzylinder (27) entweder hydraulisch unter Einschaltung eines Gasdruckspeichers oder pneumatisch betrieben sind.

7. Trennschieber nach einem der Ansprüche 1 - 6, **dadurch gekennzeichnet, dass** die Hartstoffschichten (38,39) des Schiebers (13) ringförmige Scheiben sind, von denen eine um die Öffnung (14) des Schiebers (13) herum und die andere um die Verschlussfläche des Schiebers herum angeordnet ist.

## Claims

1. A shiftable member for shutting off conduits, comprising a member housing (10) with a passage (11), a member (13) movable therein and provided with an opening (14) which exposes the passage (11), and annular sealing bodies (28) yieldingly arranged around the passage (11) in the member housing (10) on both sides of the member (13), wherein the contact surfaces (34) of the sealing bodies (28) facing the member (13) and the contact surfaces of the member (13) sealingly cooperating therewith are made of a hard material and have a surface roughness of less than 10 µm,
**characterized in that**
the contact surfaces (34) are hard-material layers (37,38,39) which are harder than the material of the member (13), wherein the member (13) is capable of deforming transversely to the member plane.

2. The shiftable member according to claim 1, **characterized in that** the hard-material layer is made of a ceramic-bonded or metal-bonded carbide or oxide.

3. The shiftable member according to claim 1 or 2, **characterized in that** the hard-material layers have a roughness of less than 4 µm.

4. The shiftable member according to one of claims 1 - 3, **characterized in that** the cooperating hard-material layers (37,38,39) of the member (13) and the sealing bodies (28) are finished in pairs.

5. The shiftable member according to one of claims 1 - 4, **characterized in that** the contact surface (34) of the sealing body (28) extends only over a portion of the width of the sealing body, wherein the remaining area (36) of the surface facing the member (13) is of receding configuration.

6. The shiftable member according to one of claims 1 - 5, **characterized in that** the fluid cylinders (27) are operated either hydraulically using a gas pressure storage means or pneumatically.

7. The shiftable member according to one of claims 1 - 6, **characterized in that** the hard-material layers (38,39) of the member (13) are annular disks, wherein one of said disks is arranged around the opening (14) of the member (13) and the other is arranged around the closing surface of the member.

## Revendications

1. Vanne d'isolement pour fermer des canalisations, comportant un boîtier de vanne (10) contenant un passage (11), un coulisseau (13) déplaçable dans celui-ci et présentant une ouverture (14) débloquant le passage (11), et des éléments d'étanchéité (28) annulaires disposés de manière déformable autour du passage (11) dans le boîtier de vanne (10) des deux côtés du coulisseau (13), les surfaces de contact (34) des éléments d'étanchéité (28) qui sont tournées vers le coulisseau (13) et les surfaces de contact du coulisseau (13) qui coopèrent avec celles-ci de manière à réaliser l'étanchéité se composent d'un matériau rigide et ont une rugosité de surface inférieure à 10 µm,
**caractérisée en ce que**
les surfaces de contact (34) sont des couches de matériau rigide (37, 38, 39) plus dures que le matériau du coulisseau (13), le coulisseau (13) étant en mesure de se déformer transversalement au plan du coulisseau.

2. Vanne d'isolement selon la revendication 1, **caractérisée en ce que** la couche de matériau rigide est composée de carbure ou d'un oxyde en liaison céramique ou métallique.

3. Vanne d'isolement selon la revendication 1 ou 2, **caractérisée en ce que** les couches de matériau rigide ont une rugosité inférieure à 4 µm.

4. Vanne d'isolement selon l'une des revendications 1 à 3, **caractérisée en ce que** les couches de matériau rigide (37, 38, 39) du coulisseau (13) et des éléments d'étanchéité (28) qui coopèrent les unes avec les autres sont usinées par paire.

5. Vanne d'isolement selon l'une des revendications 1 à 4, **caractérisée en ce que** les surfaces de contact (34) de l'élément d'étanchéité (26) ne se prolongent que sur une partie de la largeur de l'élément d'étanchéité, la section restante (36) de la surface tournée vers le coulisseau (13) étant disposée en retrait.

6. Vanne d'isolement selon l'une des revendications 1 à 5, **caractérisée en ce que** les cylindres à fluide (27) fonctionnent soit par voie hydraulique en faisant appel à un accumulateur hydro-pneumatique, soit par voie pneumatique.

7. Vanne d'isolement selon l'une des revendications 1 à 6, **caractérisée en ce que** les couches de matériau rigide (38, 39) du coulisseau (13) sont des disques annulaires, l'un d'eux étant disposé autour de l'ouverture (14) du coulisseau (13) et l'autre autour de la surface d'obturation du coulisseau.
